# FASCICULE DE BREVET EUROPEEN

(11) **EP 3 116 728 B1**
(45) Date de publication et mention de la délivrance du brevet: **02.05.2018**
(21) Numéro de dépôt: 15713844.7
(22) Date de dépôt: 11.03.2015
(51) Int. Cl.: G05D 1/00, G05D 1/02, B60G 5/02, B60G 5/06, B62D 7/15, B60G 21/045, B62D 61/04

(54) **VEHICULE A GRANDE CAPACITE DE FRANCHISSEMENT**
FAHRZEUG MIT EINER HOHEN RÄUMUNGSKAPAZITÄT
VEHICLE HAVING A HIGH CLEARING CAPABILITY

(30) Priorité: 11.03.2014 EP 14158788
(43) Date de publication de la demande: 18.01.2017
(73) Titulaire: Ecole Polytechnique Fédérale de Lausanne (EPFL), 1015 Lausanne (CH)
(72) Inventeur: ESTIER, Thomas, CH-3186 Düdingen (CH)
(74) Mandataire: Grosfillier, Philippe
(86) Numéro de dépôt international: PCT/EP2015/055067
(87) Numéro de publication internationale: WO 2015/135986

(56) Documents cités:
- WO-A1-01/53145
- FR-A- 1 337 204
- FR-A1- 2 161 017

## Description

### DOMAINE TECHNIQUE

L'objet de la présente invention appartient au domaine des véhicules pour terrain accidenté qui sont destinés à être utilisés notamment dans des environnements particuliers où la mobilité est considérée comme difficile à accomplir à l'instar des zones de catastrophes naturelles ou industrielles, voire même sur d'autre planètes. Un tel véhicule est aussi destiné à être utilisé dans des bâtiments, centrales nucléaires et autre environnements similaires.
De tels véhicules peuvent être télécommandés, ou autonomes ou conduits par un utilisateur, en fonction de leur taille et des moyens techniques embarqués. Un tel véhicule peut également être proposé sous forme de jouet.

### ETAT DE LA TECHNIQUE

Des véhicules similaires, comme des robots, sont connus de l'état de la technique.
Par exemple la demande PCT WO 01/53145 montre un véhicule pour terrain accidenté. Ce véhicule comprend six roues et un châssis,
Plus précisément, le véhicule connu comporte un châssis constitué essentiellement d'une plate-forme en forme de losange et d'une béquille arrière. Le dispositif de locomotion est du type à roulement. Il comporte un train de roulement avant avec une roue, un train central avec deux roues en tandem sur le côté droit et deux roues en tandem sur le côté gauche, et un train arrière avec une roue reliée à la béquille. Chaque roue est équipée d'un moteur. Au moins pour les roues avant et arrière, la liaison entre la roue et le châssis comporte un guidage rotatif permettant à la roue de tourner autour d'un axe perpendiculaire à son propre axe d'entraînement. Un moteur de direction commande cette rotation. La commande différentielle des moteurs de roulement du train central et celle des moteurs de direction des trains avant et arrière permet de diriger le véhicule et, notamment, de le faire tourner sur place avec un frottement minimum. Les commandes des moteurs sont concentrées sur un organe de commande central.

### DESCRIPTION DETAILLEE DE L'INVENTION

Un but de l'invention est d'améliorer les systèmes connus et de proposer un véhicule plus simple et plus performant que ceux connus jusqu'alors.

Selon un mode d'exécution, l'invention concerne un véhicule à grande capacité de franchissement, comprenant au moins quatre roues et une base. Les roues sont rattachées par paire à la base par des moyens rigides et forment un bogie par paire de roues, lesdits bogies étant articulés en rotation sur la base de manière à ce que le point de pivot de la trajectoire des roues ne soit pas physiquement existant et que ce point de pivot soit situé sous l'axe de rotation de roues lorsque le bogie est horizontal; la rotation d'un bogie étant transmise par un moyen de transmission à l'autre bogie de telle façon que l'inclinaison de chacun des bogies par rapport à la base forme un angle de valeur identique mais opposée.
Par exemple, les moyens rigides rattachant les roues à la base peuvent être des barres.

Selon un mode d'exécution du véhicule, le moyen de transmission comprend un différentiel.

Selon un mode d'exécution, le moyen de transmission comprend un moyen amortisseur qui est variable ou non. Ce moyen peut être un amortisseur.

Selon un mode d'exécution, le moyen de transmission comprend un moyen de précharge. Le moyen de précharge peut être ajustable.

Selon un mode d'exécution, chaque roue est entraînée individuellement.

Selon un mode d'exécution, au moins l'une des roues peut tourner selon un axe perpendiculaire à son axe de rotation.

Selon un mode d'exécution, les trajectoires des roues d'un bogie sont alignées dans un même plan.

Selon un mode d'exécution, les trajectoires des roues d'un bogie sont dans deux plans différents et parallèles.

Selon un mode d'exécution, la trajectoire d'une roue d'un bogie est dans le même plan que celle d'une roue de l'autre bogie.

Selon un mode d'exécution, les deux bogies sont alignés l'un par rapport à l'autre ou sont décalés l'un par rapport à l'autre.

Selon un mode d'exécution, l'une des roues d'un bogie au moins est remplacée par une paire de roues

Selon un mode d'exécution, ledit véhicule étant télécommandé ou conduit ou autonome.

L'architecture de véhicule proposée comprend notamment un châssis rigide et articulé, reliant le corps du véhicule à au moins quatre roues motrices de telle manière que ces roues soient en permanence en contact avec le sol et que le poids du véhicule soit réparti entre lesdites quatre roues.

Grâce à son châssis articulé lui offrant une haute garde au sol, le véhicule selon l'invention est capable de franchir des obstacles dont la taille est significativement supérieure à la taille des roues sans autre motorisation que celle des roues. Le châssis en tant que tel est donc dit passif, par opposition à actif qui impliquerait des actionneurs supplémentaires pour modifier la configuration du châssis, et n'est mue que par la seule gravité.

Une originalité réside dans l'architecture particulière du châssis permettant pour la première fois l'application de bogies parallèles à un véhicule à quatre roues; contre un minimum de six roues comme dans l'état de la technique, voir la publication WO 01/53145 citée ci-dessus.

Les domaines d'applications sont nombreux et couvrent l'ensemble des applications des véhicules tous terrains. En particulier et de manière non-exhaustive,
- l'intervention en cas de catastrophe (évolution dans les débris),
- l'utilisation de véhicules contrôlés à distance ou autonomes pour les opérations dans des milieux hostiles à l'être humain (par exemple contamination ABC, démantèlement de centrale nucléaire) ou pour le déminage d'engin explosif (EDO & UXO)
- le transport de charges par exemple dans le domaine de la construction et de l'exploitation de mines,
- le véhicule utilitaire ou de loisir tout terrain
- l'agriculture (en particulier la sylviculture ou la viticulture),
- le domaine des chaises roulantes à haut degré de mobilité,
- les jouets

L'invention sera mieux comprise en référence aux figures qui illustrent le principe de l'invention et plusieurs configurations de celle-ci.
Les figures 1A à 1D illustrent le principe de l'invention;
Les figures 2A à 2D illustrent une position particulière de l'invention;
Les figures 3A à 3D illustrent une autre position particulière de l'invention;
Les figures 4A et 4B illustrent une autre configuration de l'invention;
Les figures 5A à 5F illustrent trois réalisations possibles de la même configuration des figures 4A/4B;
Les figures 6A et 6B illustrent une autre configuration du véhicule selon l'invention;
Les figures 7A et 7B illustrent une autre configuration du véhicule selon l'invention;
Les figures 8A et 8B illustrent une autre configuration du véhicule selon l'invention;
Les figures 9A et 9B illustrent une autre configuration du véhicule selon l'invention;
Les figures 10A à 10D illustrent les possibilités de giration offertes par le véhicule selon l'invention;
La figure 11 illustre le mécanisme liant les deux bogies;
La figure 12 illustre une variante de réalisation du mécanisme liant les bogies;
La figure 13 illustre une autre variante de réalisation du mécanisme liant les bogies;
La figure 14 illustre une autre variante de réalisation du mécanisme liant les bogies;
La figure 15 illustre une autre variante de réalisation du mécanisme liant les bogies;
La figure 16 illustre une autre variante de réalisation du mécanisme liant les bogies.
La figure 17 illustre une autre variante de réalisation du mécanisme liant les bogies.
La figure 18 illustre une autre variante de réalisation du mécanisme liant les bogies.
La figure 19 illustre une autre variante de réalisation du mécanisme liant les bogies.
La figure 20 illustre une autre variante de réalisation du mécanisme liant les bogies.
Les figures 21A à 21H illustre une séquence de franchissement

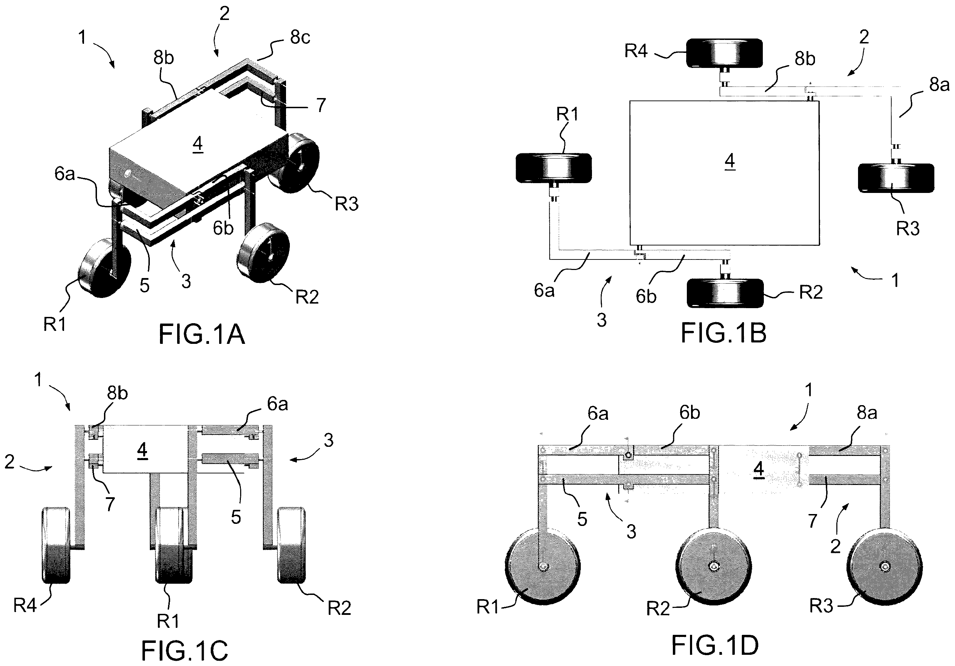

Le principe de l'invention est illustré dans les figures 1A à 1D. La figure 1A est une vue de dessus en perspective du châssis 1

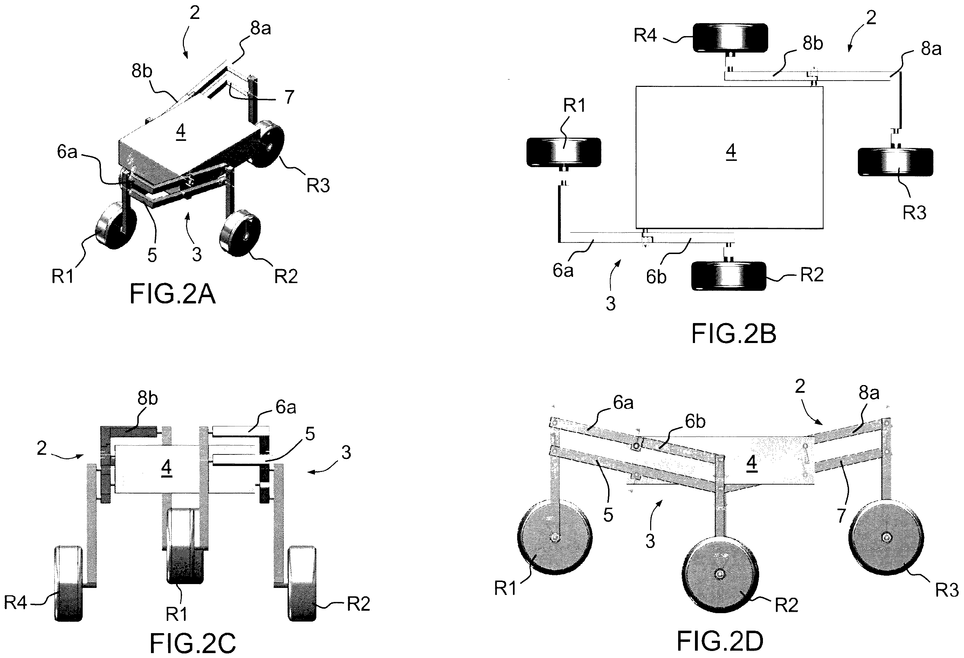

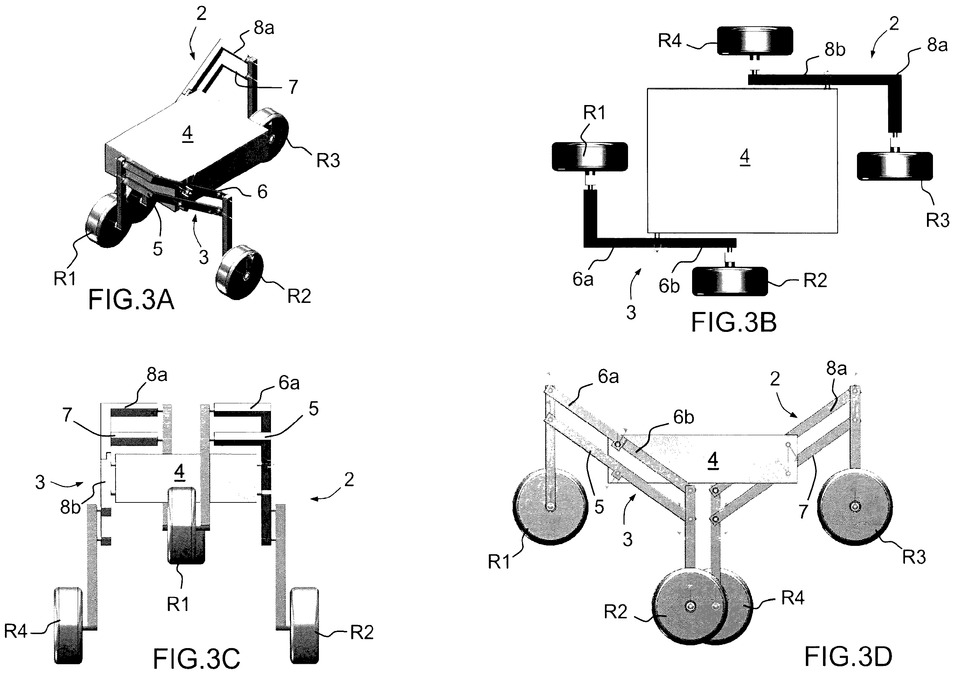

Selon l'invention, le châssis 2 comprend de deux bogies 2, 3 articulés reliés à un corps central 4 par des barres 5, 6a et 6b, 7, 8a, 8b, les barres en deux parties 6a, 6b, 8a et 8b permettant d'éviter l'hyperstatisme. Ces deux bogies 2, 3 sont également reliés entre eux par un système (mécanique ou hydraulique par exemple) coordonnant l'angle relatif des barres 5 ou 6a ou 6b avec le corps central. Ainsi comme on peut le voir sur les figures 2A, 2B, 2C, 2D, 3A, 3B, 3C et 3D l'inclinaison de chacun des bogies 2, 3 par rapport au corps central 1 forme un angle de valeur identique mais opposée.

Dans un bogie traditionnel, les roues peuvent suivre une trajectoire circulaire autour d'un pivot situé entre les axes de ces roues. La géométrie des bogies selon l'invention est dite parallèle car ils permettent à leurs roues de se déplacer selon une trajectoire définie par la géométrie des éléments les constituant mais sans que le point de pivot ne soit physiquement existant; il est ainsi dit virtuel.

A noter que ce point de pivot n'est pas situé sur une droite passant par les axes des roues mais au-dessous. A noter également qu'en fonction des configurations choisies, la trajectoire de ces roues peut se trouver dans des plans distincts.

Ainsi bien que le véhicule repose sur quatre roues, son châssis n'est pas hyperstatique et le poids du corps central 4 est réparti de manière optimale, ce qui assure une répartition également optimale de la traction générée par les roues motorisées R1-R4.

Les figures 2A à 2D illustrent une configuration du principe de l'invention dans laquelle les bogies ont une inclinaison de 12°.

Les figures 3A à 3D illustrent une configuration du principe de l'invention dans laquelle les bogies ont une inclinaison de 35°.

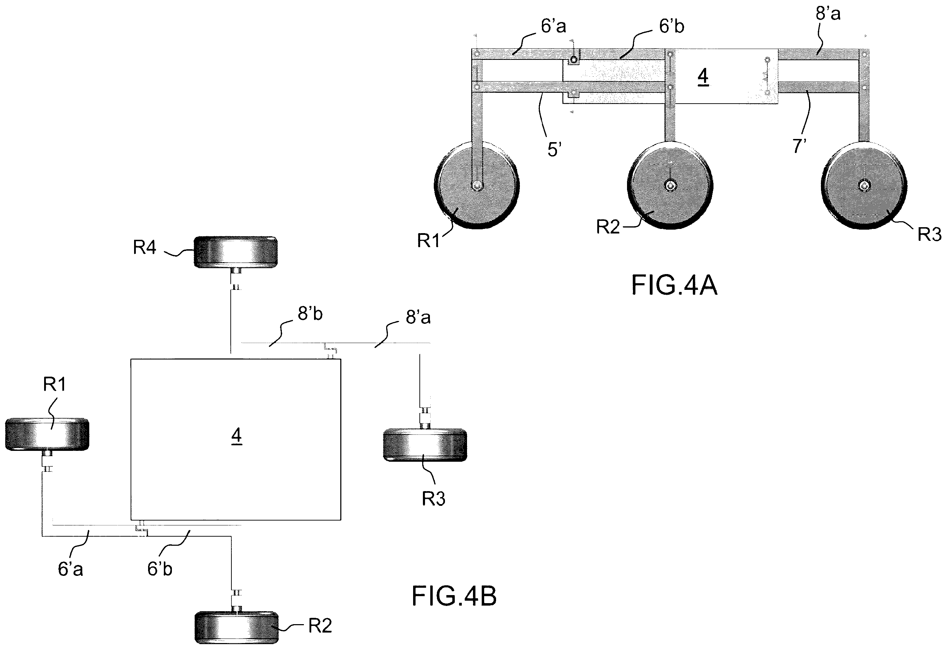

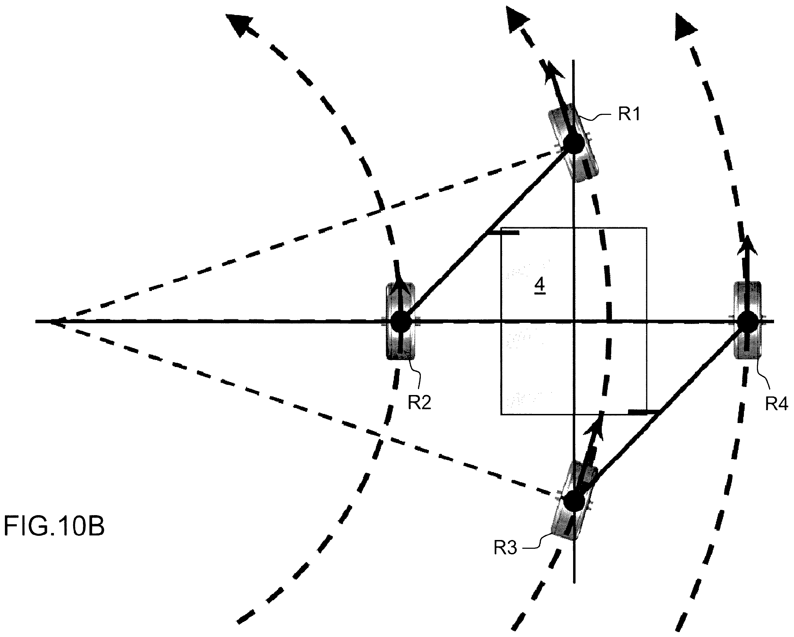

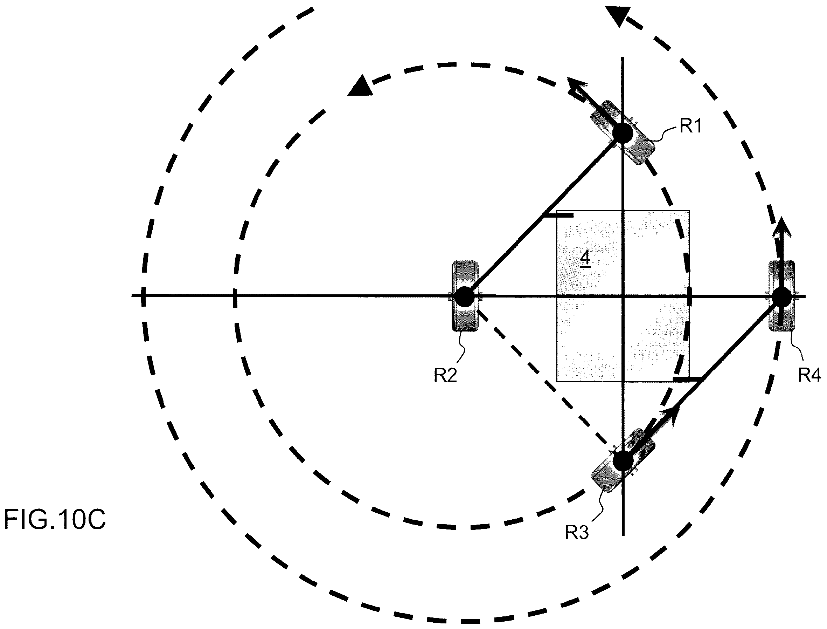

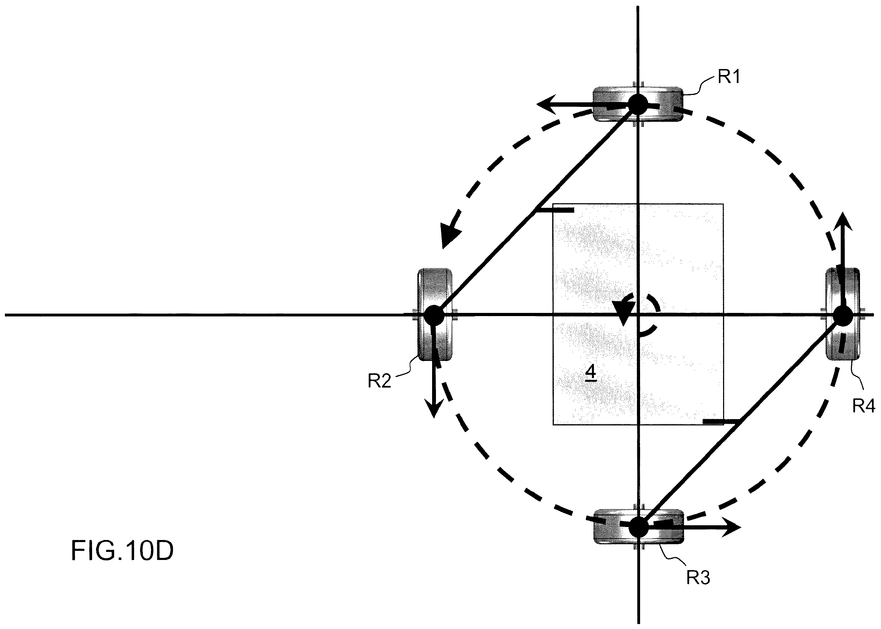

Les figures 4A et 4B illustrent une autre configuration dans laquelle les roues R1-R4 sont disposées en losange autour du corps central 4, les barres 5', 6'a, 6'b, 7',8'a, 8'b ayant une forme différente que celle des barres 5-8b des figures précédentes. Sur cette figure, n'est pas représenté, le fait que les roues R1 et R4 peuvent pivoter sur elles-mêmes et permettre une giration selon les figures 10B, C et D.
En offrant un empattement large et donc une bonne stabilité latérale (inclinaison ou force centrifuge), cette configuration est particulièrement bien adaptée aux véhicules rapides évoluant dans un environnement structurés (marches verticales par exemple) comme déstructurés.

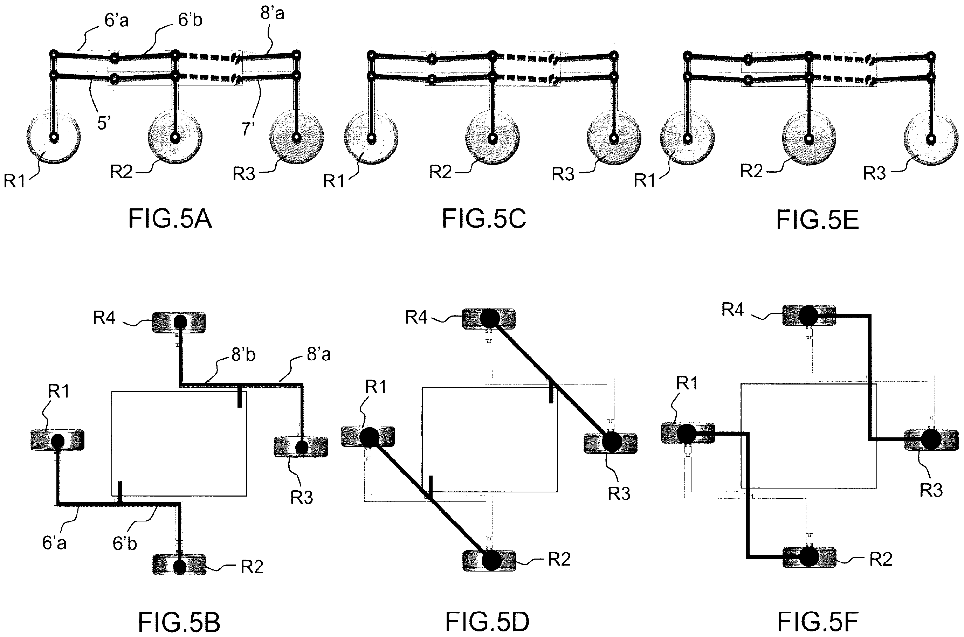

Les figures 5A à 5F illustrent trois réalisations possibles de la même configuration des figures 4A/4B bien que mécaniquement différentes sont cinématiquement identiques et constituent une même et unique configuration.

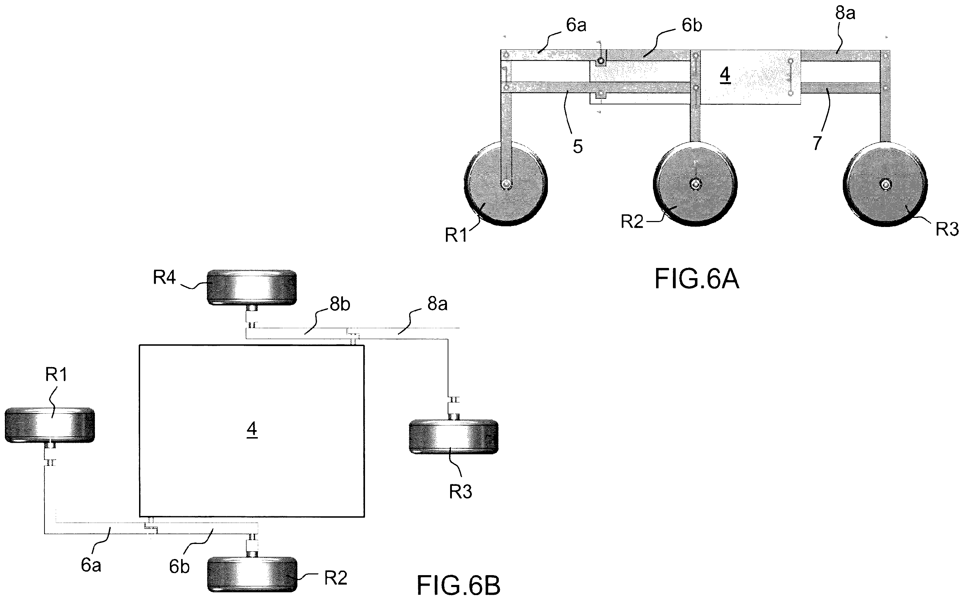

Les figures 6A-6B illustrent une autre configuration cinématiquement identique à la configuration des figures 4A/4B.
Cette configuration dispose les roues R1-R4 en losange autour du corps central 4. Sur cette figure, n'est pas représenté, le fait que les roues R1 et R4 peuvent pivoter sur elles-mêmes et permettre une giration selon les figures 10B, C et D.

En offrant un empattement plus réduit par rapport au corps central que la configuration des figures 4A/4B cette configuration est particulièrement bien adaptée aux véhicules de petite taille devant rentrer dans des bâtiment (passage de portes) dans un environnement structuré (marches verticales par exemples) comme déstructuré.

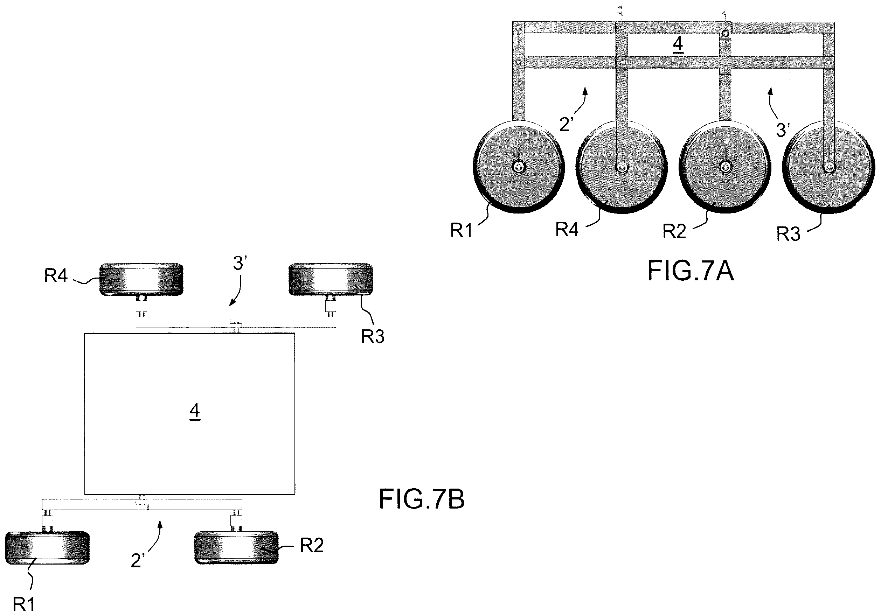

Les figures 7A et 7B illustrent une autre configuration du véhicule selon l'invention.
Cette configuration dispose les roues R1-R4 en parallélogramme autour du corps central 4. Les roues R1-R4 de chacun des bogies 2',3' sont alignées et leur trajectoire évolue dans le même plan (2 plans). Sur un plan latéral, on constate que chacune des roues est placées consécutivement et à équidistance.
Cette configuration a deux caractéristiques principales:
- accès frontal (ou arrière) au corps central par rapport au sens référentiel de déplacement.
- séquencement latéral des roues à 4 points consécutifs (au lieu de 3 dans les configurations précédentes)
Cette configuration est particulièrement bien adaptée à une plateforme de relativement petite taille, autonome ou télé-opérée, destinée à l'inspection. Le séquencement à 4 points est particulièrement bien adapté aux environnements structurés ou déstructurées où la vitesse n'est pas un critère déterminant. A noter que la taille de la charge peut éventuellement dépasser le châssis 4 lui-même.
Si le véhicule est de faible taille et sa masse est réduite; la giration peut se faire en contrôlant de manière différentié la vitesse des roues des bogies gauche et droite 2',3' (à la manière de véhicule à chenilles « skid steering »). Sinon il est adapté qu'au minimum deux des roues (R1 et R3) puissent tourner autour de leur axe vertical.

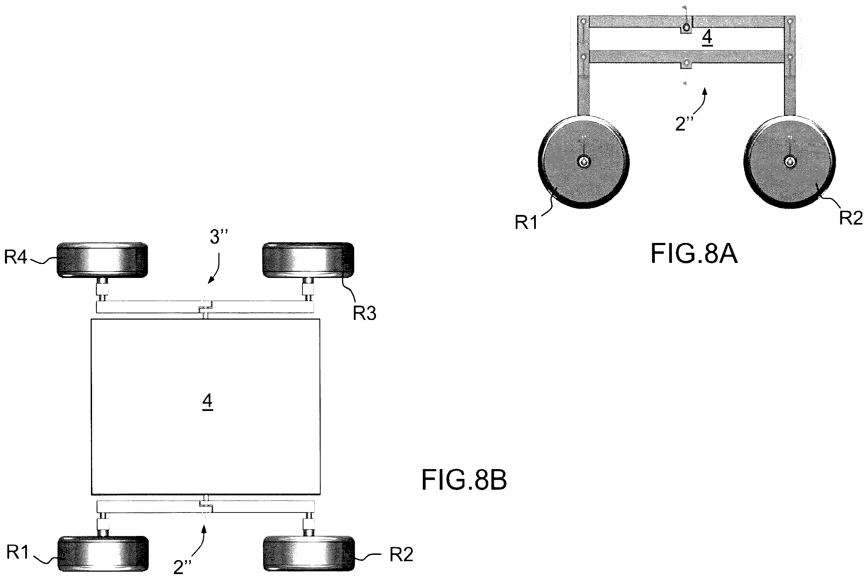

Les figures 8A et 8B illustrent une autre configuration du véhicule selon l'invention.
Cette configuration dispose les roues R1-R4 en carré autour du corps central 4. Les roues de chacun des bogies 2", 3" sont alignées et leur trajectoire évolue dans le même plan (2 plans). Sur un plan latéral, on constate que les deux bogies sont placés de manière parfaitement symétrique.
Cette configuration a deux caractéristiques principales:
- accès frontal (ou arrière) au corps central par rapport au sens référentiel de déplacement.
- séquencement latéral des roues à 2 points consécutifs (au lieu de 3 dans les configurations précédentes des figures 4A/4B)
Cette configuration est particulièrement bien adaptée pour une plateforme de relativement grande taille ou dont la charge est importante. Le séquencement à 2 points est particulièrement bien adapté aux environnements déstructurés. A noter que la taille de la charge peut éventuellement dépasser le châssis 4 lui-même.
Si le véhicule est de faible taille et sa masse réduite; la giration peut se faire en contrôlant de manière différenciée la vitesse des roues des bogies gauche et droite 2", 3" (à la manière de véhicule à chenilles). Sinon il est adapté qu'au minimum deux des roues (par exemple R1 et R4) puissent tourner autour de leur axe vertical.

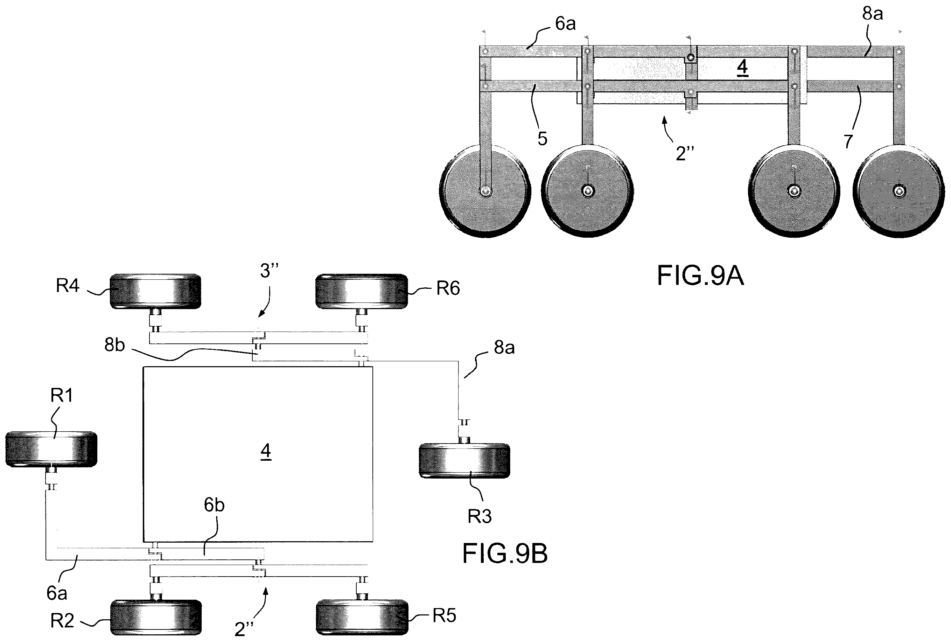

Les figures 9A et 9B illustrent une autre configuration du véhicule selon l'invention.
Cette configuration à six roues R1-R6 est cinématiquement identique à la configuration des figures 6A/6B où la roue latérale (R2/R4 dans les figures 6A/6B) de chaque bogie est remplacé par un bogie 2", 3" identique à celui utilisé dans la configuration des figures 8A/8B avec les roues R2-R5 et R4-R6 respectivement.
Cette configuration dispose les roues en losange autour du corps central. Non représenté sur le dessin, est le fait que les roues R1 et R3 peuvent pivoter sur elles-mêmes. La giration se contrôle ainsi de manière identique à la configuration des figures 6A/6B en considérant qu'un glissement des roues latérales est acceptable lors des virages.

Cette configuration est particulièrement bien adaptée aux véhicules de grande taille ou de charge relativement très lourde.
Elle est caractérisée en ce que la masse du corps central 4 est réparti pour moitié sur les roues avant et latérales. En d'autres termes, les roues avant et arrière R1, R3 supportent chacune 1/3 du poids de cette masse et les quatre roues latérales R2, R4, R5, R6 chacune 1/6.

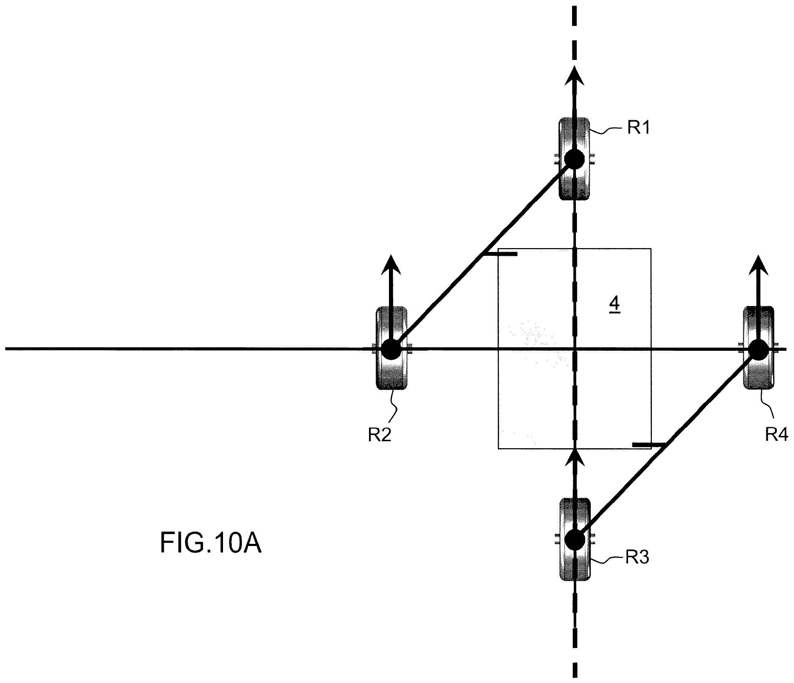

Les figures 10A à 10D illustrent les possibilités de giration offertes par le châssis. La vitesse relative ainsi que son angle est représentée par un vecteur sur les figures.

Figure 10A: Angle de giration = 0°
Figure 10B: Angle de giration = α° > 0.

Le centre de rotation est situé à l'extérieur du losange formé par les roues R1-R4.

Figure 10C: Angle de giration = β° > 0.
Le centre de rotation est situé sur le losange formé par les roues R1-R4. La vitesse de la roue R2 posée sur le centre de rotation est nulle.

Figure 10D: Angle de giration = 90°
Le centre de rotation est situé au centre du losange formé par les roues R1-R4 et le véhicule peut ainsi aisément tourner sur lui même

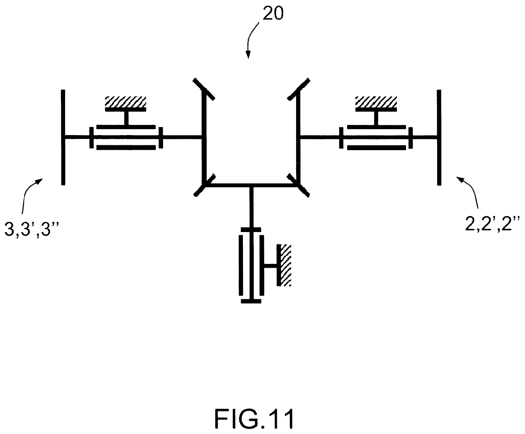

La figure 11 illustre une réalisation possible du mécanisme liant les deux bogies. Ainsi, les deux bogies 2, 3, 2', 3', 2", 3", voir les figures précédentes, sont liés entre eux par un système (mécanique ou hydraulique par exemple) coordonnant leur angle relatif respectif avec le corps central 4.
La figure 11 illustre une réalisation possible; mécanique au travers d'engrenages montés "en différentiel simple" illustré par la référence 20. Bien entendu, d'autres mécanismes équivalents remplissant la même fonction sont possibles.
Comme on le voit dans les figures 2A-2D ou 3A-3D, le mouvement de rotation d'un bogie par exemple le bogie 3 va être reporté sur l'autre bogie 2, mais dans le sens inverse selon le principe de la présente invention.

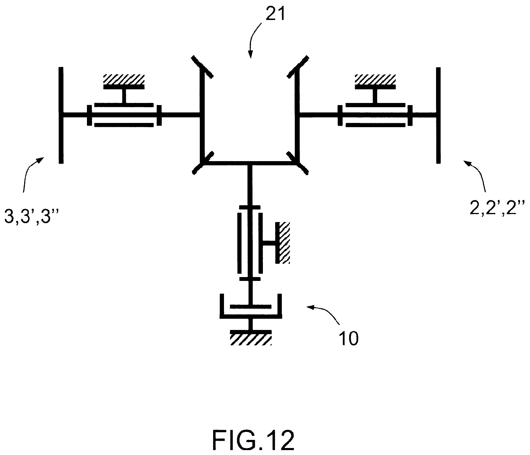

La figure 12 illustre une variante de réalisation du mécanisme 21 liant les bogies.

L'avantage de cette variante de réalisation du mécanisme 21 liant les deux bogies 2, 3; 2',3'; 2", 3"est la possibilité de rajouter facilement un amortissement 10 à l'inclinaison des bogies. Aucun amortissement n'est donc nécessaire sur chacune des roues. Le moyen d'amortissement 10 peut être un amortisseur pneumatique, hydraulique ou autre système équivalent.
Cet amortissement est indiqué notamment lorsque le véhicule est amené à se déplacer à des vitesses élevées.

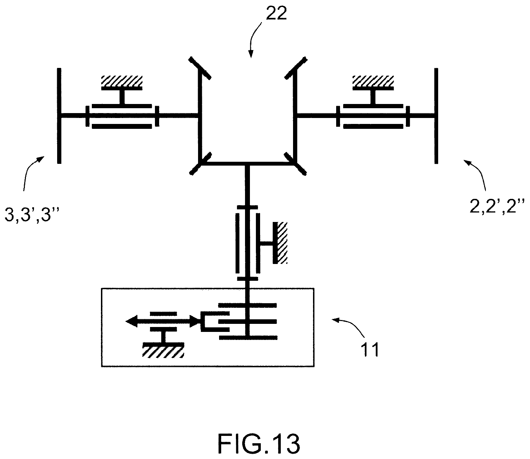

La figure 13 illustre une autre variante de réalisation du mécanisme 22 liant les bogies utilisant un amortissement variable 11. Cet amortissement variable 11 est indiqué lorsque le véhicule est amené à avoir des vitesses élevées selon certains modes de fonctionnement et des franchissements très important dans d'autres. Le moyen utilisé peut être un amortisseur à viscosité variable 11 par exemple.

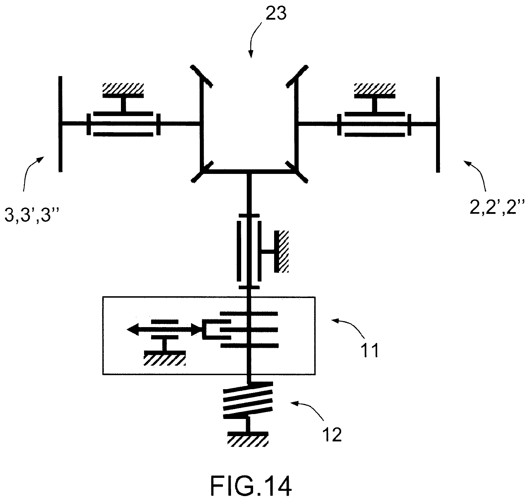

La figure 14 illustre une autre variante de réalisation du mécanisme 23 liant les bogies avec une précharge 12. La précharge peut être par exemple être réalisée mécaniquement par un ressort de torsion.

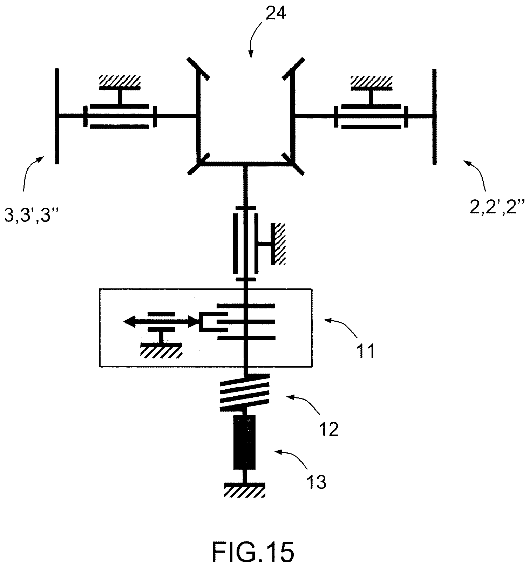

La figure 15 illustre une autre variante de réalisation du mécanisme 24 liant les bogies. Pour des besoins de franchissement particulièrement élevés, la possibilité de faire varier la précharge est tout aussi simple à rajouter par un moyen d'ajustement 13, comme par exemple un moteur monté en série avec un ressort de torsion 12.
On parle alors d'activation partielle de la structure du châssis en fonction du mode de fonctionnement

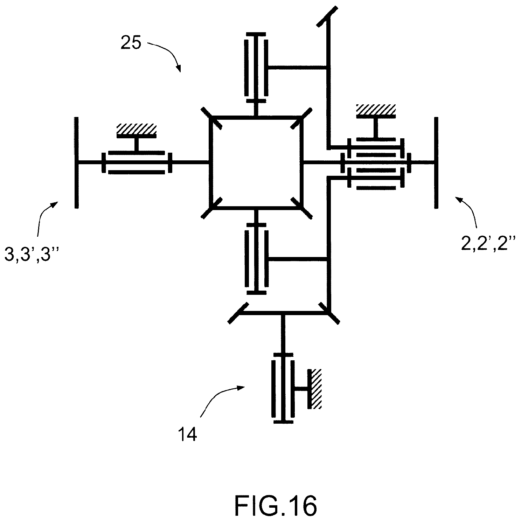

La figure 16 illustre une autre variante de réalisation de la figure 11. Soit un mécanisme 25 identique à celui utilisé pour la transmission de la traction aux roues motrices dans automobile. Un engrenage supplémentaire 14 permet d'incliner l'ensemble du différentiel en ajoutant un décalage y identique à l'inclinaison relative α de chacune des bogies. L'inclinaison de la bogie 3 devient ainsi y+α ; celle de la bogie 2 devient ainsi γ-α.
Cette configuration de synchronisation est particulièrement adaptée à la configuration des figures 8A et 8B.
En effet le degré de liberté supplémentaire (engrenage 14) permet si besoin de stabiliser activement le corps central 4 du véhicule à l'horizontale (ou parallèle au sol) quelle que soit l'inclinaison relative des bogies.

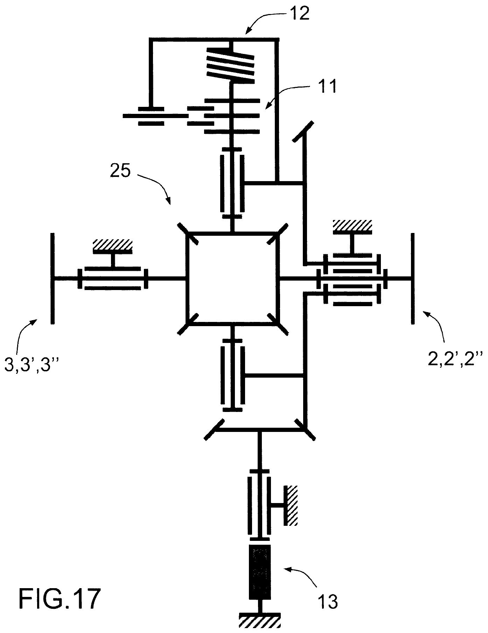

La figure 17 illustre que le mécanisme de la figure 16 reste compatible avec l'adjonction d'un amortissement 11 et d'une précharge 12 telle que présentée sur la figure 14 avec un amortissement variable 11 (ou non), une précharge 12 et un éventuel moyen d'ajustement 13 de l'engrenage 14.

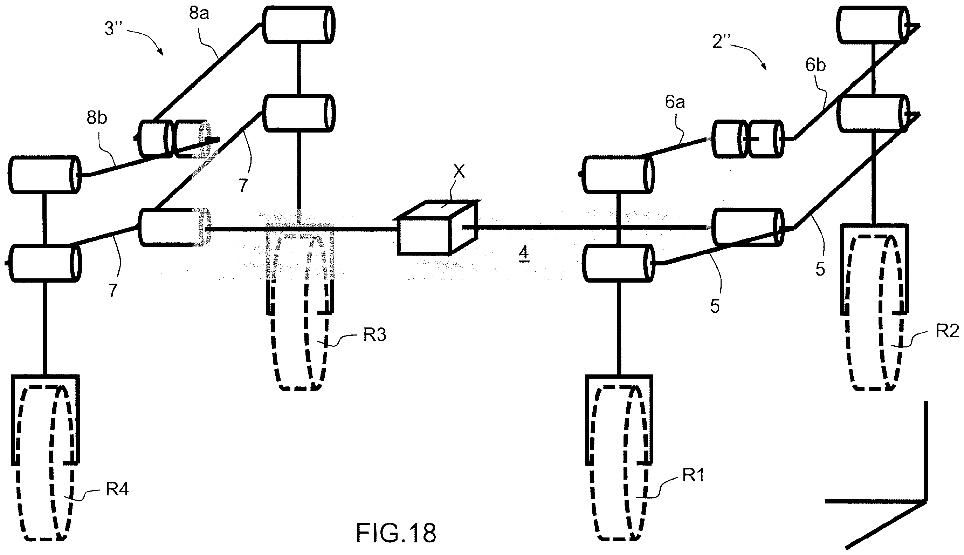

La figure 18 est une autre représentation graphique d'une configuration identique à celle de la figure 8A et 8B. Il permet de constater que le mécanisme liant les deux bogies et représenté par la boite X au milieu du véhicule peut être par exemple directement relié aux barres inférieures 5 et 7 des bogies. 6a/6b et 8a/8b étant les barres supérieures des bogies.

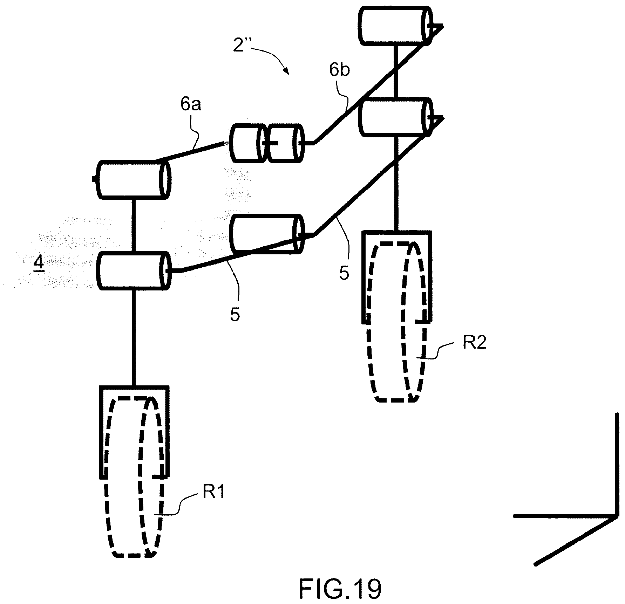

La figure 19 est un détail d'une seule des bogies de la figure 18. Elle permet de se rendre compte que la barre 5 n'est pas une droite ; c'est cet angle au niveau de l'articulation de cette barre sur le corps central 4 qui permet au point de pivot virtuel de la trajectoire des roues de se situer sous le plan passant par les deux axes des roues.

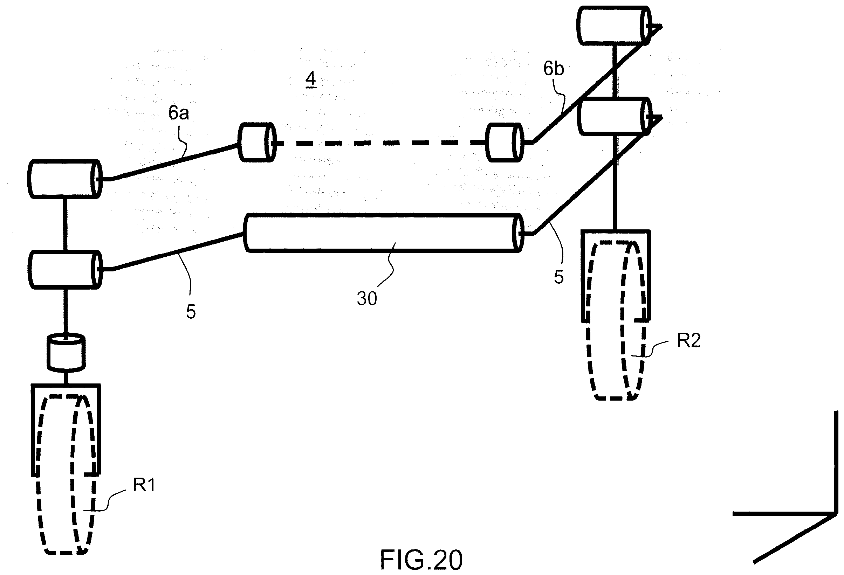

La figure 20 est une autre représentation graphique d'un seul bogie d'une configuration identique à celle de la figure 5E. La barre 5 est modifiée par rapport à la figure 19 de manière à passer au travers de son axe de rotation 30 sur la moitié de la largeur du véhicule. On constate également au-dessus de la roue R1 le mécanisme Z de rotation de ladite roue autour de l'axe vertical.

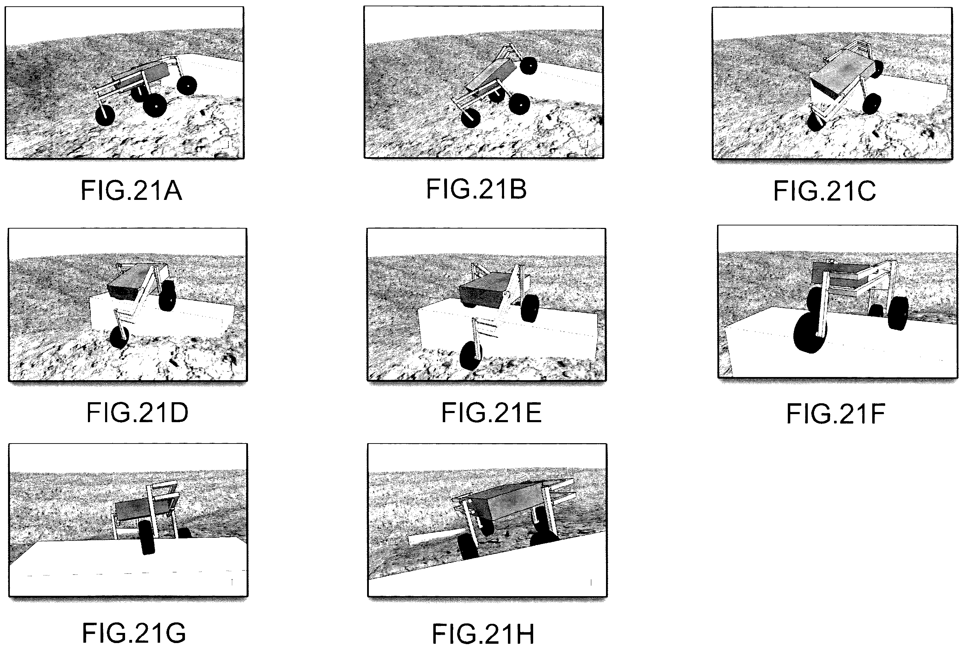

Les figures 21A à 21H illustrent une séquence de franchissement dans une des configurations proposées selon les figures 6A/6B et 1A à 3D.

Dans la figure 21A, le véhicule arrive devant un obstacle. Dans la figure 21B, la roue avant du véhicule monte sur l'obstacle ce qui incline le bogie par le mouvement de montée de la roue.

En même temps, l'autre bogie est incliné dans l'autre sens d'une même valeur angulaire en raison du lien entre les bogies.

Dans la figure 21C, la roue avant est sur l'obstacle et l'inclinaison du bogie avant est reprise par le bogie arrière dans l'autre sens.

Dans la figure 21D, la roue avant et les deux roues du milieu sont sur l'obstacle.

Dans la figure 21E, la roue arrière commence à monter sur l'obstacle.

Dans la figure 21F, la roue arrière arrive sur l'obstacle.

Dans la figure 21G, le véhicule descend de l'autre côté de l'obstacle et dans la figure 21H, le véhicule a entièrement franchi l'obstacle.

Le véhicule selon l'invention peut être conduit, télécommandés ou autonome. Les moyens nécessaires à sa commande (conduite ou télécommande ou autonome ou en combinaison) sont connus de l'homme du métier et peuvent être transposés des domaines existants, typiquement la conduite automobile ou les commandes radiocommandées de véhicules (jouets, robots etc).

Les modes d'exécution et de réalisation décrits ci-dessus sont des exemples non-limitatifs illustrant l'invention. Des variantes sont possibles sans sortir du cadre de la protection revendiquée, notamment en faisant appel à des moyens équivalents. Les différentes réalisations et variantes peuvent aussi être combinées.

## Revendications

1. Véhicule à grande capacité de franchissement, comprenant au moins quatre roues (R1-R4) et une base (4), lesdites roues étant rattachées par paire à la base par des moyens rigides (5,6a,6b,7,8a,8b) et formant un bogie (2,3) par paire de roues, lesdits bogies étant articulés en rotation sur la base de manière à ce que le point de pivot de la trajectoire des roues ne soit pas physiquement existant et que ce point de pivot soit situé sous l'axe de rotation de roues lorsque le bogie est horizontal; la rotation d'un bogie étant transmise par un moyen de transmission (20) à l'autre bogie de telle façon que l'inclinaison de chacun des bogies par rapport à la base forme un angle de valeur identique mais opposée.

2. Véhicule selon la revendication précédente, dans lequel le moyen de transmission comprend un différentiel (20).

3. Véhicule selon la revendication 1 ou 2, dans lequel le moyen de transmission comprend un moyen amortisseur (10,11) qui est variable ou non.

4. Véhicule selon l'une des revendications 1 à 3, dans lequel le moyen de transmission comprend un moyen de précharge (12).

5. Véhicule selon la revendication précédente, dans lequel le moyen de précharge est ajustable (13).

6. Véhicule selon l'une des revendications 1 à 5, dans lequel chaque roue est entraînée individuellement.

7. Véhicule selon l'une des revendications précédentes, dans lequel au moins l'une des roues peut tourner selon un axe perpendiculaire à son axe de rotation.

8. Véhicule selon l'une des revendications précédentes, dans lequel les roues d'un bogie sont alignées dans un même plan.

9. Véhicule selon l'une des revendications précédentes 1 à 8, dans lequel les roues d'un bogie sont dans deux plans différents et parallèles.

10. Véhicule selon la revendication précédente, dans lequel une roue d'un bogie est dans le même plan qu'une roue de l'autre bogie.

11. Véhicule selon la revendication 8, dans lequel les deux bogies sont alignés l'un par rapport à l'autre ou son décalés l'un par rapport à l'autre.

12. Véhicule selon l'une des revendications précédentes dans lequel l'une des roues d'un bogie au moins est remplacée par une paire de roues

13. Véhicule selon l'une des revendications précédentes, ledit véhicule étant télécommandé ou conduit ou autonome.

## Patentansprüche

1. Fahrzeug mit hoher Räumungskapazität, umfassend mindestens vier Räder (R1-R4) und eine Basis (4), wobei die Räder paarweise an die Basis durch starre Mittel (5, 6a, 6b, 7, 8a, 8b) angehängt sind und ein Drehgestell (2, 3) pro Räderpaar bilden, wobei die Drehgestelle in Drehung an der Basis angelenkt sind, so dass der Drehpunkt der der Bahn der Räder physisch nicht vorhanden ist, und dass der Drehpunkt unter der Drehachse der Räder angeordnet ist, wenn das Drehgestell horizontal ist; wobei die Drehung eines Drehgestells durch ein Übertragungsmittel (20) auf das andere Drehgestellt übertragen wird, so dass die Neigung jedes der Drehgestellte in Bezug zur Basis einen Winkel von identischem aber entgegengesetztem Wert bildet.

2. Fahrzeug nach dem vorhergehenden Anspruch, bei dem das Übertragungsmittel ein Differential (20) umfasst.

3. Fahrzeug nach Anspruch 1 oder 2, bei dem das Übertragungsmittel ein Dämpfungsmittel (10, 11), das variabel ist oder nicht, umfasst.

4. Fahrzeug nach einem der Ansprüche 1 bis 3, bei dem das Übertragungsmittel ein Vorbelastungsmittel (12) umfasst.

5. Fahrzeug nach dem vorhergehenden Anspruch, bei dem das Vorbelastungsmittel einstellbar (13) ist.

6. Fahrzeug nach einem der Ansprüche 1 bis 5, bei dem jedes Rad individuell angetrieben wird.

7. Fahrzeug nach einem der vorhergehenden Ansprüche, bei dem sich mindestens eines der Räder entlang einer Achse senkrecht auf seine Drehachse drehen kann.

8. Fahrzeug nach einem der vorhergehenden Ansprüche, bei dem die Räder eines Drehgestells in einer selben Ebene ausgerichtet sind.

9. Fahrzeug nach einem der vorhergehenden Ansprüche 1 bis 8, bei dem die Räder eines Drehgestells in zwei unterschiedlichen und parallelen Ebenen sind.

10. Fahrzeug nach dem vorhergehenden Anspruch, bei dem ein Rad eines Drehgestells in derselben Ebene wie ein Rad des anderen Drehgestells ist.

11. Fahrzeug nach Anspruch 8, bei dem die zwei Drehgestelle zueinander ausgerichtet oder zueinander versetzt sind.

12. Fahrzeug nach einem der vorhergehenden Ansprüche, bei dem eines der Räder eines Drehgestells zumindest durch ein Räderpaar ersetzt ist.

13. Fahrzeug nach einem der vorhergehenden Ansprüche, wobei das Fahrzeug ferngesteuert oder gelenkt oder autonom ist.

## Claims

1. Vehicle having a great clearance capacity, comprising at least four wheels (R1-R4) and a base (4), the wheels being fixed in pairs to the base by rigid means (5, 6a, 6b, 7, 8a, 8b) and forming a bogie (2, 3) per pair of wheels, the bogies being articulated in terms of rotation to the base so that the pivot location of the trajectory of the wheels does not physically exist and that pivot location is located under the rotation axis of wheels when the bogie is horizontal; the rotation of one bogie being transmitted by a transmission means (20) to the other bogie in such a manner that the inclination of each of the bogies in relation to the base forms an angle having a value which is identical but opposite.

2. Vehicle according to the preceding claim, wherein the transmission means comprises a differential (20).

3. Vehicle according to Claim 1 or 2, wherein the transmission means comprises a damping means (10, 11) which may or may not be variable.

4. Vehicle according to one of Claims 1 to 3, wherein the transmission means comprises a preload means (12).

5. Vehicle according to the preceding claim, wherein the preload means (13) is adjustable.

6. Vehicle according to one of Claims 1 to 5, wherein each wheel is driven individually.

7. Vehicle according to one of the preceding claims, wherein at least one of the wheels can rotate about an axis which is perpendicular to the rotation axis thereof.

8. Vehicle according to one of the preceding claims, wherein the wheels of a bogie are aligned in the same plane.

9. Vehicle according to one of the preceding Claims 1 to 8, wherein the wheels of a bogie are in two different and parallel planes.

10. Vehicle according to the preceding claim, wherein a wheel of a bogie is in the same plane as a wheel of the other bogie.

11. Vehicle according to Claim 8, wherein the two bogies are aligned relative to each other or are offset relative to each other.

12. Vehicle according to one of the preceding claims, wherein at least one of the wheels of a bogie is replaced by a pair of wheels.

13. Vehicle according to one of the preceding claims, Vehicle being remote controlled or driven or autonomous.
